# EUROPEAN PATENT APPLICATION

(11) **EP 4 257 712 A1**
(43) Date of publication of application: **11.10.2023**
(21) Application number: 22204539.5
(22) Date of filing: 28.10.2022
(51) Int. Cl.: C22B 3/20, C22B 3/24, C22B 3/00, C22B 47/00, B01J 20/32

(54) **SEPARATION METHOD OF SEPARATION TARGET METAL**

(30) Priority: 05.04.2022 JP 2022063081
(71) Applicant: Shizuoka Prefectural University Corporation, Shizuoka-shi, Shizuoka 422-8526 (JP)
(72) Inventor: Nagai, Daisuke, Shizuoka, 422-8064 (JP); Hondoh, Hironori, Shizuoka, 424-0067 (JP); Anma, Yuki, Shizuoka, 438-0067 (JP); Hisano, Masanori, Hokkaido, 086-1002 (JP); Kawabata, Koki, Shizuoka, 422-8007 (JP)
(74) Representative: Schröer, Gernot H.

(57) **Abstract**

Provided is a method for effectively separating a target metal and a metal coordination polymer used therefore. The separation method of a separation target metal uses a metal ligand having an oxide of the separation target metal as a core. The separation method of the separation target metal includes a step of dispersing the metal ligand in a solution containing the separation target metal and separating the separation target metal in the solution as the oxide of the separation target metal. A metal coordination polymer includes: a metal oxide; and a ligand polymer that carries the metal oxide. The metal oxide is an oxide of any one, two, or more of cobalt, nickel, and manganese, and the ligand polymer is a copolymer of an optionally substituted divinylbenzene and acrylic acid or methacrylic acid.

## Description

### TECHNICAL FIELD

The embodiments disclosed herein relate to a method for separating (recovering) a target metal.

### BACKGROUND ART

Japanese Patent No. 6960070 discloses a recovery method of metal that obtains slurry by dispersing battery slag of a lithium-ion battery into sulfuric acid, adds a sulfite to the slurry, and separate manganese from valuable metals. As described in JP-6960070, it is desired to separate and recover a target metal.

JP-A-2019-137876 discloses a method for separating the target metal from a metal mixture solution by using a seed nucleus growth method on a metal coordination polymer.
Patent Document 1: JP-B-6960070
Patent Document 2: JP-A-2019-137876

### DISCLOSURE OF THE INVENTION

### PROBLEMS TO BE SOLVED BY THE INVENTION

It is an objective of this specification to provide, for example, a method for effectively separating the target metal or the like.

### SOLUTIONS TO THE PROBLEMS

This invention is based on findings from examples in which, basically, by dispersing a metal ligand with an oxide XO of a separation target metal as a core in a solution containing a separation target metal X, the separation target metal X contained in the solution can be, for example, aggregated to the core as the oxide XO of the separation target metal.

This invention is also based on the findings from the examples in which by causing a strong acid salt (for example, a sulfate) of the separation target metal X to be carried in a carrier and heating it together with a strong base, the metal ligand with the oxide XO of the separation target metal as the core can be obtained.

### ADVANTAGEOUS EFFECTS OF THE INVENTION

According to this specification, a method for effectively separating a target metal, for example, can be provided.

### BRIEF DESCRIPTION OF THE DRAWINGS

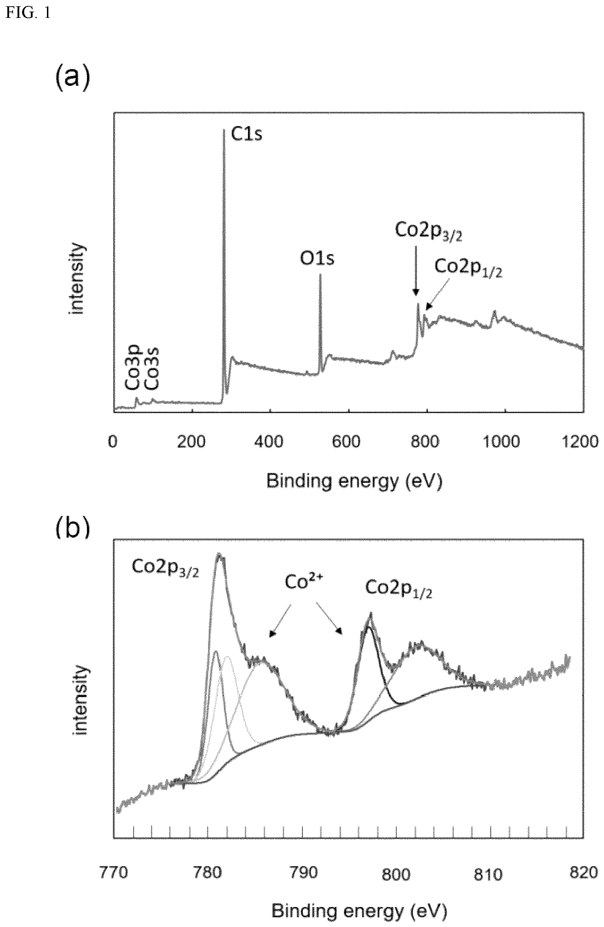

FIG. 1A and FIG. 1B are graphs substituting for drawings, which illustrate XPS spectrums of a polymer after CoO nucleation, where a vertical axis is intensity, and a horizontal axis is an electron binding energy (eV);
FIG. 1A is a wide-scan spectrum and FIG. 1B is a narrow-scan spectrum;
FIG. 2 is a graph substituting for a drawing, which illustrates IR spectrums of a metal coordination polymer and a polymer having a CoO nucleus, where the vertical axis is the intensity, and a horizontal axis is a wave number (cm⁻¹);
FIG. 3 is a graph substituting for a drawing, which illustrates adsorption rates of Co, Ni and Mn using a polymer having the CoO nucleus, where the vertical axis is the adsorption rate;
FIG. 4 is a graph substituting for a drawing, which illustrates adsorption rates of Co, Ni and Mn using a polymer having an NiO nucleus, where the vertical axis is the adsorption rate;
FIG. 5 is a graph substituting for a drawing, which illustrates adsorption rates of Co, Ni and Mn using a polymer having an MnO nucleus, where the vertical axis is the adsorption rate;
FIG. 6A and FIG. 6B are graphs substituting for drawings, which illustrate the XPS spectrums of the polymer after the nucleation obtained in Example 1, where the vertical axis indicates the intensity, and the horizontal axis indicates the electron binding energy (eV);

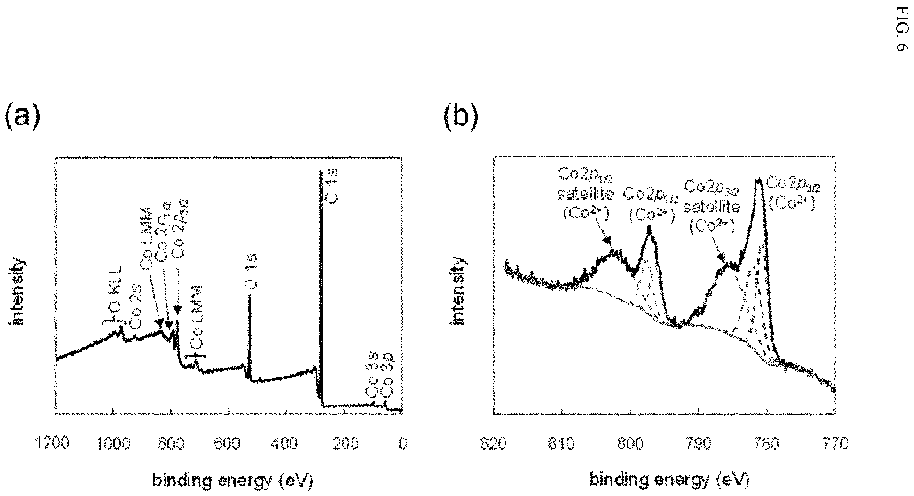

FIG. 6A illustrates the wide-scan (wide-scan) spectrum;
FIG. 6B illustrates the narrow-scan (narrow-scan) spectrum;

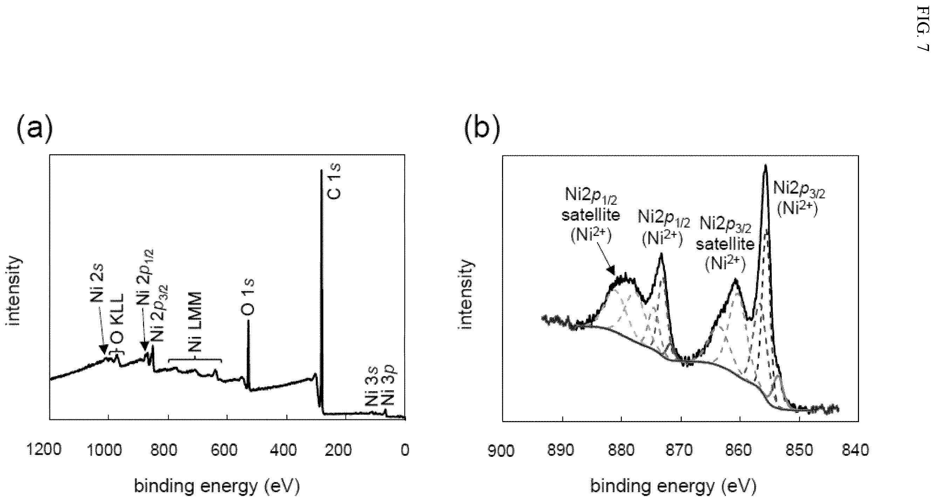

FIG. 7A and FIG. 7B are graphs substituting for drawings, which illustrate the XPS spectrums of the polymer after the nucleation obtained in Example 3, where the vertical axis indicates the intensity, and the horizontal axis indicates the electron binding energy (eV);
FIG. 7A illustrates the wide-scan (wide-scan) spectrum;
FIG. 7B illustrates the narrow-scan (narrow-scan) spectrum;

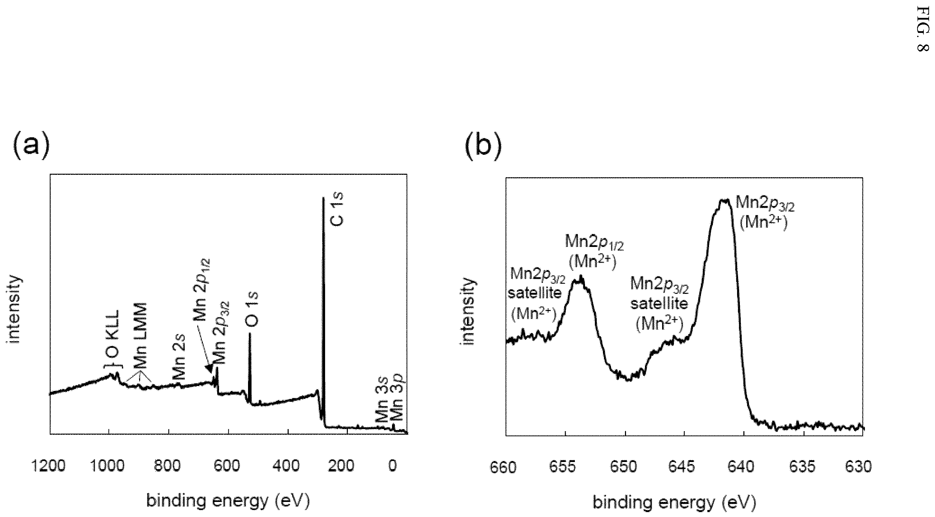

FIG. 8A and FIG. 8B are graphs substituting for drawings, which illustrate the XPS spectrums of the polymer after the nucleation obtained in Example 4, where the vertical axis indicates the intensity, and the horizontal axis indicates the electron binding energy (eV);
FIG. 8A illustrates the wide-scan (wide-scan) spectrum;
FIG. 8B illustrates the narrow-scan (narrow-scan) spectrum;

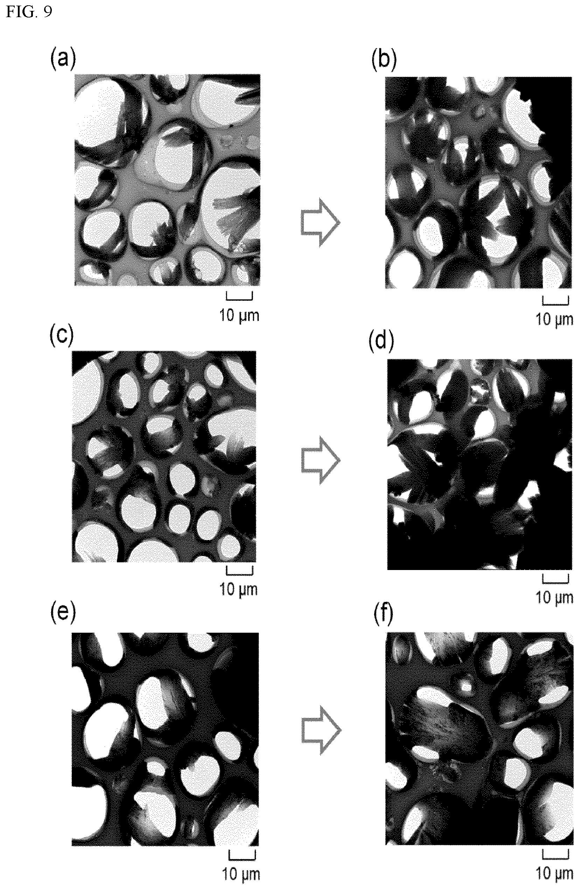

FIGS. 9A to 9F are TEM images substituting for drawings, which show states of the nucleations and nucleus growths of CoO, NiO, and MnO on the metal coordination polymer;
FIG. 9A illustrates the state of the nucleation of CoO on the metal coordination polymer;
FIG. 9C illustrates the state of the nucleation of NiO on the metal coordination polymer;
FIG. 9E illustrates the state of the nucleation of MnO on the metal coordination polymer;
FIG. 9B illustrates the state of the nucleus growth of CoO on the metal coordination polymer;
FIG. 9D illustrates the state of the nucleus growth of NiO on the metal coordination polymer;
FIG. 9F illustrates the state of the nucleus growth of MnO on the metal coordination polymer; and

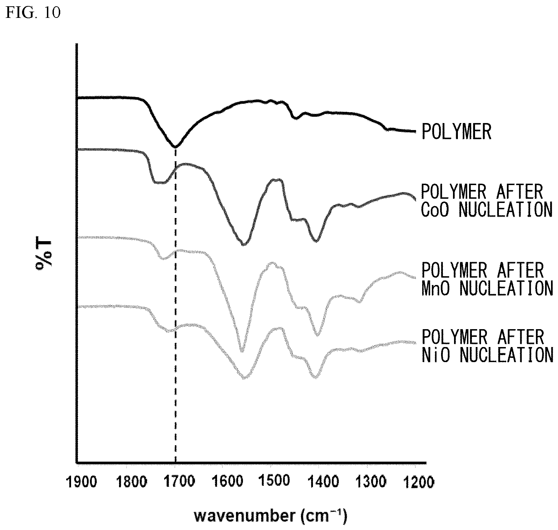

FIG. 10 is a graph substituting for a drawing, which illustrates the IR spectrums of the metal coordination polymer and the polymers after the nucleation, where the horizontal axis is a wave number.

### DESCRIPTION OF PREFERRED EMBODIMENTS

The following describes embodiments for executing the invention. The invention is not limited to the embodiments described below, and includes the ones that are modified as necessary by those skilled in the art within a scope obvious from the following embodiments.

### Separation method of separation target metal

First embodiment relates to the separation method of the separation target metal.

This separation method of the separation target metal is one that uses a metal ligand with an oxide of the separation target metal as a core. Then, this method includes a step of dispersing the metal ligand in a solution containing the separation target metal and separating the separation target metal in the solution as the oxide of the separation target metal. After separation as the oxide of the separation target metal, the oxide may be appropriately reduced to recover the separation target metal.

### Separation target metal X

The separation target metal is not specifically limited as long as it is a metal that can form a salt or an oxide.

Examples of the separation target metal include a rare metal, a noble metal, and a base metal.

Examples of the rare metal include lithium, beryllium, rare earth element (rare earth), titanium, vanadium, chromium, manganese, cobalt, nickel, gallium, germanium, selenium, rubidium, strontium, zirconium, niobium, molybdenum, palladium, indium, antimony, tellurium, cesium, hafnium, tantalum, tungsten, rhenium, thallium, and bismuth. Examples of the noble metal include gold, silver, and platinum. Examples of the base metal include iron, copper, aluminum, and lead.

Preferred examples as the separation target metal are the rare metal and the noble metal. Many recycling technologies for the rare metal have not been established. On the other hand, the rare metal can be effectively separated by using a technique of the invention. Accordingly, the rare metal is particularly preferable as the separation target metal. Examples of the separation target metal are any one, two, or more of cobalt (Co), nickel (Ni), and manganese (Mn). For example, in the method disclosed in JP-A-2019-137876, by growing crystals of platinum from a platinum group mixture solution using a polymer with Pt (0) as a nucleus, platinum is separated. In considering applying this method to the separation of Co/Ni/Mn, while a standard reduction potential of a platinum group is +0.8 V to +1.2 V, the standard reduction potentials of Co, Ni and Mn are as low as -0.3 V, -0.3 V, and -1.1 V, respectively. Consequently, these metals are less likely to be reduced, and it is difficult to separate these metals by using the method disclosed in JP-A-2019-137876. On the other hand, the invention described in this specification, as indicated in the examples, can effectively separate cobalt, nickel, and manganese. Co, Ni and Mn have similar chemical properties. Accordingly, no technique has been established for effectively separating any one of Co, Ni and Mn from a solution containing two or more of them. As indicated by the examples described later, the method described in this specification can effectively separate any one of Co, Ni and Mn from a solution containing two or more of Co, Ni and Mn, and thus, is a highly excellent separation method.

### Oxide XO of separation target metal

The oxide of the separation target metal is a compound of (a cation of) the metal and oxygen. In this specification, the oxide of the separation target metal is expressed as XO for convenience. Meanwhile, an actual molar ratio of O to X varies depending on a valence of an X ion.

### Metal ligand

The metal ligand is a compound or a composition having the oxide XO of the separation target metal as a core. XO being the core means that an XO portion is present in the metal ligand, rather than the XO being an element of the composition. Then, the separation target metal in a solution containing the separation target metal aggregates to the core. The compound or the composition having the oxide XO of the separation target metal as a core includes the core (XO) and a carrier. The carrier is an element for carrying the core.

A preferred example of the metal ligand is a metal ligand having the oxide XO of the separation target metal as a core and having a coordinatable group containing any one or more of an oxygen atom, a nitrogen atom, a sulfur atom, and a phosphorus atom. In this example, the carrier has the coordinatable group and XO is bonded by the coordinatable group. An example of a bonding mode is a coordinate bond. An example of the coordinatable group is a carboxy group. However, the metal ligand may be a chelate complex having XO as a core and a plurality of coordination positions.

A preferred example of the metal ligand is a metal coordination polymer having the oxide XO of the separation target metal as a core and a polymer as a carrier. A preferred example of the metal coordination polymer is one having the oxide XO of the separation target metal as a core and the carboxy group as a coordination group. An example of the carrier is a copolymer of (1) an optionally substituted divinylbenzene and (2) acrylic acid or methacrylic acid. A polymerization ratio of (2) to (1) may be appropriately adjusted depending on an application.

Examples of an optionally substituted divinylbenzene include divinylbenzene and divinylbenzene having one to four substituents. A vinyl group of divinylbenzene may be any of an ortho position, a meta position, and a para position or a mixture of them.

Examples of the substituent of divinylbenzene include a halogen atom, a cyano group, a hydroxy group, an amino group, a nitro group, a C₁₋₆ alkyl group, a C₁₋₆ alkoxy group, a C₂₋₆ alkenyl group, a C₂₋₆ alkynyl group, a C₃₋₆ cycloalkyl group. Examples of the halogen atom include a fluorine atom, a chlorine atom, a bromine atom, and an iodine atom.

Examples of the C₁₋₆ alkyl group include a methyl group, an ethyl group, an n-propyl group, an isopropyl group, an n-butyl group, an isobutyl group, a sec-butyl group, a tert-butyl group, an n-pentyl group, an isopentyl group, a neopentyl group, a tert-pentyl group, a 1-metylbutyl group, a 2-metylbutyl group, a 1,2-dimethylpropyl group, a 1-ethylpropylgroup, an n-hexyl group, an isohexyl group, a 1-methylpentyl group, a 2-methylpentyl group, a 3-methylpentyl group, a 1,1-dimethylbutyl group, a 1,2-dimethylbutyl group, a 2,2-dimethylbutyl group, a 1-ethylbutyl group, a 1,1,2-trimethylpropyl group, a 1,2,2-trimethylpropyl group, a 1-ethyl-2-methylpropyl group, and a 1-ethyl-1-methylpropyl group.

An example of the C₁₋₆ alkoxy group includes a group in which a group represented by -O- is connected to an end of the C₁₋₆ alkyl group described above. Specific examples include a methoxy group, an ethoxy group, and a propyloxy group.

Examples of the C₂₋₆ alkenyl group include a vinyl group, an allyl group, a 3-butenyl group, and a 4-pentenyl group.

Examples of the C₂₋₆ alkynyl group include an ethynyl group, a 1-propynyl group, a propargyl group, and a 3-butynyl group.

Examples of the C₃₋₆ cycloalkyl group include a cyclopropyl group, a cyclobutyl group, a cyclopentyl group, and a cyclohexyl group.

The above-described copolymer may include a known crosslinking agent. The crosslinking agent preferably has one or two or more of ethylene-based double bond. Examples of the crosslinking agent include an acrylate derivative, a diacrylate derivative, a triacrylate derivative, an acrylamide derivative, and a bisacrylamide derivative. Among them, the diacrylate derivative and the bisacrylamide derivative are preferred. Examples of the acrylate-based derivative include 1,4-butanediol diacrylate, 1,3-butylene glycol diacrylate, ethylene glycol diacrylate, pentaerythritol tetraacrylate, triethylene glycol diacrylate, polyethylene glycol diacrylate, dipentaerythritol diacrylate, sorbitol triacrylate, a bisphenol A diacrylate derivative, a diacrylate derivative containing a urethan bond, trimethylpropane triacrylate, and dipentaerythritol polyacrylate.

Examples of the acrylamide-based derivative include N,N'-methylenebisacrylamide, N,N'-trimethylenebis (vinylsulfonylacetamide), ethylene glycol dimethacrylate, diethylene glycol dimethacrylate, triethylene glycol dimethacrylate, tetraethylene glycol dimethacrylate, polyethylene glycol dimethacrylate, methylenebisacrylamide, and N,N'-(1,2-dihidroxyethylene) bisacrylamide. Among them, N,N'-methylenebisacrylamide can be preferably used as the crosslinking agent.

Only one of the crosslinking agents may be used, or the crosslinking agent may be used by mixing two or more of them.

When the crosslinking agent is used, a molecular portion derived from the crosslinking agent may be present within a structural formula of the metal coordination polymer.

Examples of a number average molecular weight (Mn) of the polymer as a carrier are 1,500 or more and 1,000,000 or less. The number average molecular weight of the polymer is a polystyrene conversion molecular weight (g/mol) obtained by a gel permeation chromatography (GPC) measurement. The number average molecular weight (Mn) may by from 3,000 to 500,000, may be from 5,000 to 200,000, or may be from 10,000to 200,000.

When the carrier is a copolymer of (1) an optionally substituted divinylbenzene and (2) acrylic acid or methacrylic acid, it is believed that XO is coordinated to the carboxy group present on the carrier to form the core. Subsequently, it is believed that the XO portion functions as a core that aggregates the X ion in the solution as XO.

A specific example of the metal ligand includes one having cobalt oxide, nickel oxide, or manganese oxide (manganese dioxide) as a core and a copolymer of (1) an optionally substituted divinylbenzene and (2) acrylic acid or methacrylic acid as a carrier.

### Solution containing separation target metal

The solution containing the separation target metal X is a solution in which the separation target metal X is dissolved as a cation. A method for dissolving the separation target metal X as a cation is known. By using the known method, a solution containing the separation target metal X can be obtained. For example, by pulverizing a target containing the separation target metal X, mixing it with a liquid containing a strong acid or a strong alkali, and then stirring it under heating, a solution in which the separation target metal X is dissolved as a cation can be obtained.

### Manufacturing method of metal ligand

The following describes the manufacturing method of the metal ligand taking the metal ligand having a polymer as a carrier as an example. In the following example, a step of obtaining a carrier polymer (a ligand polymer) and a step of obtaining the metal ligand by using a sulfate of the separation target metal X and a base as the carrier polymer are included. The carrier polymer preferably has the carboxy group.

The carrier polymer can be obtained, for example, by using a scheme below.

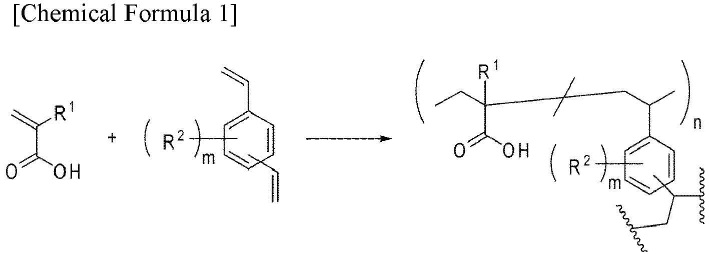

In the above-described scheme, R¹ is hydrogen or a methyl group, R² is the substituent of divinylbenzene, and m is 0 to 4. When m is 2 or more, R² may be identical or different and is the substituent of divinylbenzene.

Acrylic acid (methacrylic acid) and a divinylbenzene derivative are dissolved in an organic solvent, and an initiator of a radical reaction is mixed, and then, agitation is performed while degassing is performed as necessary to cause a radical copolymerization reaction to proceed to obtain a crosslinked material. The molar ratio of the divinylbenzene derivative to acrylic acid (methacrylic acid) is 2:1 to 1:20, may be 1:1 to 1:10, or may be 1:2 to 1:5. In the above-described scheme, a known crosslinking agent may be mixed. It is only necessary that a mixture ratio of the crosslinking agent is appropriately adjusted depending on a physical property and a structural formula of the copolymer to be obtained. The reaction system may appropriately contain a polymerization initiator (for example, the radical polymerization initiator) or may use a known catalyst as necessary.

Examples of the organic solvent include hexane, cyclohexane, acetone, ethyl acetate, isobutyl acetate, 2-butanone, tetrahydrofuran, dimethylsulfoxide, methanol, dodecane, toluene, and hexane. Among them, the preferred organic solvents are toluene and dimethylsulfoxide.

Examples of the radical reaction initiator include 2,2'-azobis-(2,4-dimethylvaleronitrile), 2,2'-azobisisobutyronitrile, 1,1'-azobis (cyclohexane-1-carbonitrile), 2,2'-azobis-4-methoxy-2,4-dimethylvaleronitrile, and azobisisobutyronitrile. Among them, 2,2'-azobisisobutyronitrile (AIBN) is preferred.

The reaction is preferably performed in presence of an inert gas or in vacuum. Examples of the inert gas include noble gas (for example, argon) and nitrogen.

Examples of reaction temperatures include from 50°C to 90°C, may be from 60°C to 80°C, or may be from 65°C to75°C.

Examples of a reaction time include from one hour to one week, may be from 10 hours to two days. It is only necessary that a stirring rate is appropriately adjusted.

By subjecting the crosslinked material obtained by the above-described scheme to Soxhlet extraction with alcohol (for example, ethanol) and then drying in vacuum, a carrier polymer can be obtained. This carrier polymer is a ligand polymer having the carboxy group.

### Step of obtaining metal ligand

An example of the step of obtaining metal ligand is a step of obtaining the metal ligand by using the carrier polymer, a sulfate of the separation target metal X, and a base. This step allows forming the core (nucleus) of XO on the carrier polymer. The core is a portion that becomes a core where XO, for example, aggregates in a separation work. A sulfate XSO₄ of the separation target metal X may be a solvate (for example, a hydrate). While the sulfate of the separation target metal X is also represented as XSO₄ for convenience, a composition ratio of SO₄ to X varies depending on the valence of X. By dispersing the carrier polymer in a solvent, refluxing the sulfate XSO₄ of the separation target metal and an alkali under heating, and then cooling it, the metal ligand can be obtained. A surfactant is preferably added to the reaction system. In this respect, it is believed that the sulfate XSO₄ of the separation target metal is trapped on the carrier polymer and the sulfate XSO₄ of the separation target metal is replaced with XO.

A known solvent can be appropriately used as the solvent.

Examples of the solvent include an ester-based organic solvent, an aliphatic ketone, an ether-based organic solvent, an amid-based organic solvent, a hydrocarbon-based organic solvent, an alcoholic organic solvent, a diol-based organic solvent, a nitrile-based solvent, and a halogen-based solvent. Any one of the solvents may be used or two or more of them may be mixed to be used.

Examples of the ester-based organic solvent include methyl acetate, ethyl acetate, and butyl acetate. Examples of the aliphatic ketone include acetone, methyl ethyl ketone, methyl isobutyl ketone, diacetone alcohol, cyclopentanone, cyclohexanone.

Examples of the ether-based organic solvent include ethylene glycol dimethyl ether, dibutyl ether, tetrahydrofuran, methylcyclopentyl ether, and dioxane.

Examples of the amid-based organic solvent include N-methylpyrrolidone, 2-pyrrolidone, dimethylformamide, dimethylimidazolidinone, and dimethylacetamide.

Examples of the hydrocarbon-based organic solvent include toluene and hexane.

Examples of the alcoholic organic solvent include methanol, ethanol, propanol, isopropanol, butanol, t-butylalcohol, and amyl alcohol.

Examples of the diol-based organic solvent include ethylene glycol, diethylene glycol, triethylene glycol, propylene glycol, dipropylene glycol, and 1,3-propanediol.

An example of the nitrile-based solvent include acetonitrile.

Examples of the halogen-based solvent include dichloromethane and trichlorethylene.

Among them, the diol-based organic solvent is preferred.

Examples of the base include sodium hydroxide, potassium hydroxide, calcium hydroxide, aqueous ammonia, sodium carbonate, and sodium hydrogen carbonate. A preferred example of the base is sodium hydroxide. In this reaction, the surfactant may be added as necessary. Examples of the surfactant include oleic acid, stearic acid, sodium oleate, sodium stearate, magnesium stearate, and sodium benzoate. A preferred surfactant is sodium oleate. It is only necessary that each composition ratio is adjusted as necessary.

The reaction is preferably performed under the presence of the inert gas. Examples of the inert gas include a noble gas (for example, argon) and nitrogen.

Examples of the reaction temperatures include from 100°C to 400°C, may be from 150°C to300°C, or may be from 150°C to 250°C. Examples of the reaction time include from 0.5 hours to one day, may be from one hour to four hours.

By drying in vacuum after washing the metal ligand, the metal ligand after purification can be obtained.

### Step of separating separation target metal

The step of separating the separation target metal is a step for dispersing the metal ligand in a solution containing the separation target metal and separating the separation target metal in the solution as the oxide XO of the separation target metal. It is only necessary that the solution containing the separation target metal is in an environment in which the separation target metal can be ionized. The solvent in the solution containing the separation target metal is not specifically limited. As the examples of the solvent, those similar to the solvent used in the step of obtaining the metal ligand can be appropriately used. A method for dissolving the separation target metal is known. Thus, it is only necessary that the separation target metal is dissolved from one that contains the separation target metal by using a known method. It is only necessary that the one that contains the separation target metal, which is to be dissolved, contains the separation target metal. Examples of the one that contains the separation target metal, which is to be dissolved, include mobile phones to be recycled, substrates, circuits, electronic components, and accessories. In the solution, acidity of the solution may be appropriately adjusted using a pH adjustor, or an amount of the solvent may be adjusted. It is only necessary that the step of separating the separation target metal basically performs a process similar to that of the step of obtaining the metal ligand. This step allows obtaining an aggregate in which X ions in the solution are aggregated, for example, as XO to XO in the core in the metal ligand. Thus, the separation target metal can be separated from the solution containing the separation target metal. In this step, it is preferable that the separation target metal in the solution is separated from the solution by crystal growth using XO in the metal ligand as a nucleus (core).

### Step of recovering separation target metal

After separated as the oxide XO of the separation target metal, the separation target metal X may be recovered as necessary by reducing the oxide. The recovery may be performed by reacting the oxide XO of the separation target metal with the strong acid. Examples of the strong acid include sulfuric acid, nitric acid, and hydrochloric acid. The separation target metal after recovery may be a pure metal or a salt of the separation target metal (for example, a sulfate, a nitrate, and a hydrochloride). It is only necessary that an appropriate recovery method is adopted according to the application of the separation target metal. The method of recovering the separation target metal X from the oxide XO of the separation target metal is known. Thus, it is only necessary that the separation target metal X is recovered from the oxide XO of the separation target metal by using a known method. As an example of recovering the separation target metal, it is only necessary that the aggregate is dissolved in the presence of the strong acid and the carrier is removed. Examples of the strong acid include a mixed liquid of nitric acid, perchloric acid, sulfuric acid, hydrochloric acid, and hydrofluoric acid.

### Application example of the invention

For example, a plurality of oxides XO (X₁O, X₂O, X₃O, ··· XₙO) of the separation target metals are prepared, and in the solution containing the separation target metals, each oxide of the separation target metal may be obtained by physically separating them, or additionally, the separation target metals may be recovered. For physical separation, it is only necessary that a known method is adopted as necessary. For example, it is only necessary that each oxide of the separation target metal is housed in a bag or basket that allows the solution to pass through but does not allow the metal coordination polymer to pass through, and then the step of separating the separation target metals is performed in the solution containing the separation target metals. For example, the metal coordination polymer with CoO as a core, the metal coordination polymer with MnO as a core, and the metal coordination polymer with NiO as a core are sealed in each of three bags. Then, crystals of CoO, MnO and NiO are grown inside each bag. Thus, CoO, MnO and NiO can be simultaneously separated. After the crystal growth, CoO, MnO and NiO can be separated by removing the three bags. As indicated by the examples described below, it was shown that using the invention allows separating CoO, MnO and NiO. Consequently, it is believed that CoO, MnO and NiO can be simultaneously separated by using the metal coordination polymer having each of CoO, MnO and NiO as a core.

### [Example 1]

### Synthesis of metal coordination polymer

After nitrogen substitution was performed with respect to a 50 mL two neck eggplant flask, divinylbenzene (0.72 g, 4.5 mmol), 2,2'-azobisisobutyronitrile (AIBN, 0.074 g, 0.45 mmol), dimethylsulfoxide (DMSO, 22.5 mL), toluene (7.5 mL), acrylic acid (2.06 mL, 15 mmol) were added. Subsequently, freeze-degassing was performed and then stirring was performed at 70°C for 24 hours. After Soxhlet extraction of the obtained crosslinked material with ethanol, the metal coordination polymer (80%, 1.44 g) was obtained by drying in vacuum.

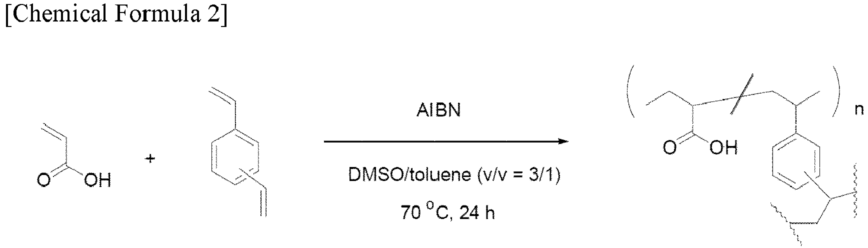

### CoO nucleation on metal coordination polymer

Prior to a separation experiment of Co, CoO nucleation was performed on the metal coordination polymer. Under an argon atmosphere, the metal coordination polymer (0.6 g), CoSO₄·7H₂O (1.12 g, 4 mmol), sodium hydroxide (0.16 g, 4 mmol), and sodium oleate (1.21 g, 4 mol) were added to ethylene glycol (20 mL) and then, heating reflux was performed at 200°C for two hours. After natural cooling, the obtained polymer was washed with distilled water and then dried in vacuum to obtain a polymer having the CoO nucleus (73.9 mg of CoO was carried per 1 g of the polymer).

### XPS spectrums of polymer after CoO nucleation

When the XPS spectrums of the polymer after the nucleation were measured, peaks ascribed to Co2p_{3/2} and O1s were confirmed from a wide-scan spectrum (FIG. 1A), and the peak of Co (II) were confirmed from a narrow-scan spectrum (FIG. 1B). From this, generation of the CoO nucleus on the polymer was confirmed. Since the narrow-scan spectrum was similar to the CoO spectrum in a literature, the generation of the CoO nucleus was also supported.

### IR spectrums of metal coordination polymer and polymer after CoO nucleation

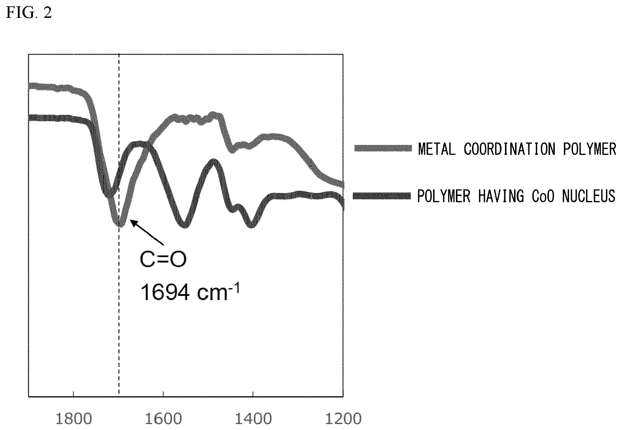

The IR spectrums of the metal coordination polymer and the polymer after the CoO nucleation were measured (FIG. 2). Since an absorption peak derived from the carbonyl group observed near 1694 cm⁻¹ in the IR spectrum of the metal coordination polymer was shifted on a higher wave number side (near 1717 cm⁻¹) in the IR spectrum of the polymer after the CoO nucleation, and a new absorption peak was observed near 1550 cm⁻¹, it was confirmed that the carboxy group of the metal coordination polymer was coordinated to CoO.

### [Example 2]

### Separation of Co from Co/Ni/Mn mixed solution by polymer having CoO nucleus

Under an argon atmosphere, a polymer having the CoO nucleus (0.8 g), CoSO₄·7H₂O (33.7 mg, 0.12 mmol), NiSO₄·6H₂O (31.5 mg, 0.12 mmol), MnSO₄·5H₂O (30 mg, 0.12 mmol), sodium hydroxide (31.2 mg, 0.8 mmol), and sodium oleate (0.24 mg, 0.8 mmol) were added to ethylene glycol (12 mL) and then, the heating reflux was performed at 200°C for two hours. After the natural cooling, after the obtained polymer was washed with distilled water, the polymer was obtained.

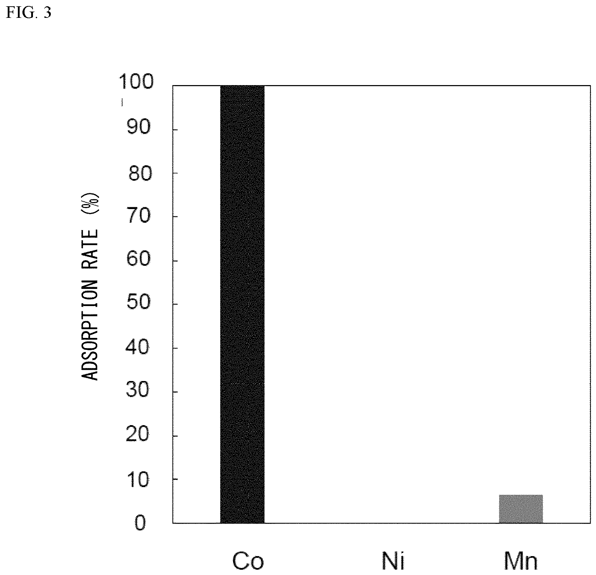

The obtained polymer (0.05 g) was put into a Teflon (registered trademark) beaker, nitric acid (1.5 mL), hydrofluoric acid (1.5 mL) were added, and the beaker was covered with a watch glass, and then, heated on a hot plate for 30 minutes. Subsequently, perchloric acid (1.5 mL) was added, and the beaker was covered with a watch glass and then, heated on a hot plate for 30 minutes. Then, the watch glass was removed, and heating was continued. When the mixture was evaporated to dryness and became a syrup state, the beaker was removed from the hot plate and left and cooled. Subsequently, by adding a 1 mol/L aqueous nitric acid solution (5 mL) to the Teflon (registered trademark) beaker and heating the beaker on the hot plate for two minutes, the dried sample was dissolved. This solution was transferred to a centrifuge tube to be subjected to a centrifugal separator (3000 rpm, for 40 minutes), and an obtained supernatant liquid was put into a 10 mL measuring flask and added with 0.1 mol/L aqueous nitric acid solution to bring a total volume to 10 mL. When this solution was diluted by 50 times, and concentrations of Co, Mn, Ni were measured with an atomic absorption photometer (HITACHI Z-2310) to determine an adsorption rate (adsorption rate = (initial concentration - concentration determined with the atomic absorption photometer) / initial concentration x 100), it was revealed that Co can be recovered selectively and with a high adsorption rate (100%) (FIG. 3).

### [Example 3]

### Nucleation of NiO on metal coordination polymer

Prior to a separation experiment of Ni, the nucleation of NiO was performed on the metal coordination polymer. Under an argon atmosphere, the metal coordination polymer (0.6 g), NiSO₄·6H₂O (1.05 g, 4 mmol), sodium hydroxide (0.16 g, 4 mmol), and sodium oleate (1.21 g, 4 mmol) were added to ethylene glycol (20 mL) and then, the heating reflux was performed at 200°C for two hours. After the natural cooling, the obtained polymer was washed with distilled water and then dried in vacuum to obtain a polymer having an NiO nucleus (92.83 mg of NiO was carried per 1 g of the polymer).

### Separation of Ni from Co/Ni/Mn mixed solution by polymer having NiO nucleus

Under an argon atmosphere, a polymer having the NiO nucleus (0.8 g), CoSO₄·7H₂O (33.7 mg, 0.12 mmol), NiSO₄·6H₂O (31.5 mg, 0.12 mmol), MnSO₄·5H₂O (30 mg, 0.12 mmol), sodium hydroxide (31.2 mg, 0.80 mmol), and sodium oleate (0.24 g, 0.80 mmol) were added to ethylene glycol (12 mL) and then, the heating reflux was performed at 200°C for two hours. After the natural cooling, the obtained polymer was washed with distilled water, and then, the polymer was obtained.

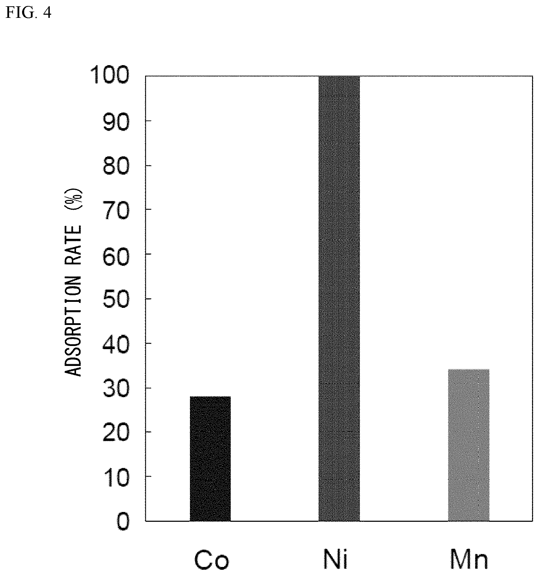

The obtained polymer (0.05 g) was put into a Teflon (registered trademark) beaker, nitric acid (1.5 mL), hydrofluoric acid (1.5 mL) were added, and the beaker was covered with a watch glass, and then, heated on a hot plate for 30 minutes. Subsequently, perchloric acid (1.5 mL) was added, and the beaker was covered with a watch glass and then, heated on a hot plate for 30 minutes. Then, the watch glass was removed, and heating was continued. When the mixture was evaporated to dryness and became a syrup state, the beaker was removed from the hot plate and left and cooled. Subsequently, by adding a 1 mol/L aqueous nitric acid solution (5 mL) to the Teflon (registered trademark) beaker and heating the beaker on the hot plate for two minutes, the dried sample was dissolved. This solution was transferred to a centrifuge tube to be subjected to a centrifugal separator (3000 rpm, for 40 minutes), and an obtained supernatant liquid was put into a 10 mL measuring flask and added with 0.1 mol/L aqueous nitric acid solution to bring a total volume to 10 mL. When this solution was diluted by 50 times, and the concentrations of Co, Mn, Ni were measured with an atomic absorption photometer to determine the adsorption rate, it was revealed that Ni can be preferentially adsorbed (FIG. 4).

### [Example 4]

### Nucleation of MnO on metal coordination polymer

Prior to a separation experiment of Mn, the nucleation of MnO was performed on the metal coordination polymer. Under an argon atmosphere, the metal coordination polymer (0.6 g), MnSO₄·6H₂O (0.96 g, 4 mmol), sodium hydroxide (0.16 g, 4 mmol), and sodium oleate (1.21 g, 4 mmol) were added to ethylene glycol (20 mL) and then, the heating reflux was performed at 200°C for two hours. After the natural cooling, the obtained polymer was washed with distilled water and then dried in vacuum to obtain a polymer having an MnO nucleus (119.1 mg of MnO was carried per 1 g of the polymer).

### Separation of Mn from Co/Ni/Mn mixed solution by polymer having MnO nucleus

Under an argon atmosphere, a polymer having the MnO nucleus (0.8 g), CoSO₄·7H₂O (33.7 mg, 0.12 mmol), NiSO₄·6H₂O (31.5 mg, 0.12 mmol), MnSO₄·5H₂O (30 mg, 0.12 mmol), sodium hydroxide (31.2 mg, 0.80 mmol), and sodium oleate (0.24 g, 0.80 mmol) were added to ethylene glycol (12 mL) and then, the heating reflux was performed at 200°C for two hours. After the natural cooling, after the obtained polymer was washed with distilled water, the polymer was obtained.

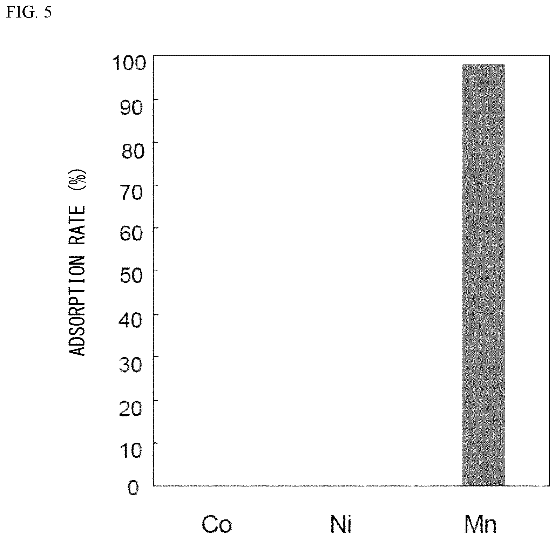

The obtained polymer (0.05 g) was put into a Teflon (registered trademark) beaker, nitric acid (1.5 mL), hydrofluoric acid (1.5 mL) were added, and the beaker was covered with a watch glass, and then, heated on a hot plate for 30 minutes. Subsequently, perchloric acid (1.5 mL) was added, and the beaker was covered with a watch glass and then, heated on a hot plate for 30 minutes. Then, the watch glass was removed, and heating was continued. When the mixture was evaporated to dryness and became a syrup state, the beaker was removed from the hot plate and left and cooled. Subsequently, by adding a 1 mol/L aqueous nitric acid solution (5 mL) to the Teflon (registered trademark) beaker and heating the beaker on the hot plate for two minutes, the dried sample was dissolved. This solution was transferred to a centrifuge tube to be subjected to a centrifugal separator (3000 rpm, for 40 minutes), and an obtained supernatant liquid was put into a 10 mL measuring flask and added with 0.1 mol/L aqueous nitric acid solution to bring a total volume to 10 mL. When this solution was diluted by 50 times, and concentrations of Co, Mn, Ni were measured with an atomic absorption photometer to determine the adsorption rate, it was revealed that Mn can be recovered selectively and with a high adsorption rate (100%) (FIG. 5).

### [Reference Example 1]

### XPS spectrum of polymer after CoO nucleation

The XPS spectrum of the polymer after the nucleation obtained in Example 1 was measured again. The results were shown in FIG. 6A and FIG. 6B. FIG. 6A and FIG. 6B are graphs substituting for drawings, which illustrate the XPS spectrums of the polymer after the nucleation obtained in Example 1. FIG. 6A illustrates a wide-scan (wide-scan) spectrum. FIG. 6B illustrates a narrow-scan (narrow-scan) spectrum. From FIG. 6A, peaks derived from Co2*p*_{3/2}, Co2p_{1/2} and O1*s* were confirmed. From FIG. 6B, the peak of Co2*p*_{3/2} was confirmed at 780.6 eV, and the peak of Co2*p*_{1/2} was confirmed at 797.0 eV. Since these peak positions are close to the peak positions of CoO (https://srdata.nist.gov/xps/EngElmSrchQuery.aspx?EType=PE&CSOpt=Retri_ex_dat& Elm=Co), the generation of the CoO nucleus was confirmed on the polymer. Further, since the narrow-scan spectrum of FIG. 6B was similar to the spectrum of CoO of the literature, the generation of the CoO nucleus was supported (X-ray Photoelectron Spectroscopy (XPS) Reference Pages: Cobalt (xpsfitting.com)).

### [Reference Example 2]

### XPS spectrum of polymer after NiO nucleation

The XPS spectrum of the polymer after nucleation in Example 3 was measured again. The results were shown in FIG. 7A and FIG. 7B. FIG. 7A and FIG. 7B are graphs substituting for drawings, which illustrate the XPS spectrums of the polymer after the nucleation obtained in Example 3. FIG. 7A illustrates a wide-scan (wide-scan) spectrum. FIG. 7B illustrates a narrow-scan (narrow-scan) spectrum. From FIG. 7A, peaks ascribed to Ni2*p*_{3/2}, Ni2*p*_{1/2}, and O1*s* were observed. From FIG. 7B, the peak of Ni2*p*_{3/2} was separated into three peaks at 853.3 eV, 855.7 eV, and 856.9 eV. Since these peak positions almost agreed with the literature regarding the XPS spectrums of NiO (Uhlenbrock, St.; Scharfschwerdt, Chr.; Neumann, M.; Illing, G.; Freund, H.-J. J. Phys.: Condens. Matter 1992, 4, 7973-7978.), the generation of the NiO nucleus was supported.

### [Reference Example 3]

### XPS spectrum of polymer after MnO nucleation

The XPS spectrum of the polymer after the nucleation obtained in Example 4 was measured. The results were shown in FIG. 8A and FIG. 8B. FIG. 8A and FIG. 8B are graphs substituting for drawings, which illustrate the XPS spectrums of the polymer after the nucleation obtained in Example 4. FIG. 8A illustrates a wide-scan (wide-scan) spectrum. FIG. 8B illustrates a narrow-scan (narrow-scan) spectrum. As shown in FIG. 8A, peaks derived from Mn2*p*_{3/2}, Mn2*p*_{1/2}, and O1s were observed. In FIG. 8B, the peak of Mn2*p*_{3/2} was observed at 641.5 eV, and the peak of Mn2*p*_{1/2} was observed at 653.7 eV. These peak positions almost agreed with values of the literature regarding the XPS spectrums of MnO (Zhang, C.; Wang, J.-G.; Jin, D.; Xie, K.; Wei, B. Electrochim. Acta 2015, 180, 990-997.). Further, since there is a report (https://www.thermofisher.com/jp/ja/home/materials-science/learning-center/periodic-table.html) that MnO has satellite peaks and other manganese oxides (MnO₂ and Mn₂O₃) do not have the satellite peak, the generation of the MnO nucleus was supported.

### [Example 5]

Transmission electron microscope (TEM) image of nucleation and after nucleus growth

FIGS. 9A to 9F are TEM images substituting for drawings illustrating states of nucleations and nucleus growths of CoO, NiO, and MnO on the metal coordination polymers. FIG. 9A, FIG. 9C, and FIG. 9E each illustrate the states of the nucleations of CoO, NiO, and MnO on the metal coordination polymers. FIG. 9B, FIG. 9D, and FIG. 9F each illustrate the states of the nucleus growths of CoO, NiO, and MnO on the metal coordination polymers.

The nucleus growth using polymers having CoO, NiO, and MnO as a nucleus was performed according to the contents described below.

Under an argon atmosphere, the nucleus growth was performed on the polymer (0.6 g) having CoO as a nucleus by adding CoSO₄·7H₂O (1.05 g, 4 mmol), sodium hydroxide (0.16 g, 4 mmol), and sodium oleate (1.21 g, 4 mmol) to ethylene glycol (20 mL) and performing the heating reflux at 200°C for two hours. After a reaction container was left and cooled, the obtained polymer was washed by distilled water and then, dried in vacuum to obtain a polymer where the nucleus was grown.

Under an argon atmosphere, the nucleus growth was performed on the polymer (0.6 g) having NiO as a nucleus by adding NiSO₄·6H₂O (1.05 g, 4 mmol), sodium hydroxide (0.16 g, 4 mmol), and sodium oleate (1.21 g, 4 mmol) to ethylene glycol (20 mL) and performing the heating reflux at 200°C for two hours. After a reaction container was left and cooled, the obtained polymer was washed by distilled water and then, dried in vacuum to obtain a polymer where the nucleus was grown.

Under an argon atmosphere, the nucleus growth was performed on the polymer (0.6 g) having MnO as a nucleus by adding MnSO₄·5H₂O (1.05 g, 4 mmol), sodium hydroxide (0.16 g, 4 mmol), and sodium oleate (1.21 g, 4 mmol) to ethylene glycol (20 mL) and performing the heating reflux at 200°C for two hours. After a reaction container was left and cooled, the obtained polymer was washed by distilled water and then, dried in vacuum to obtain a polymer where the nucleus was grown.

When the TEM images (FIG. 9B, FIG. 9D, and FIG. 9F) after performing the nucleus growth of CoO, NiO, and MnO were compared with the TEM images (FIG. 9A, FIG. 9C, and FIG. 9E) before performing the nucleus growth, since the crystals became larger after the nucleus growth compared to those of the polymer having a nucleus, it was proved that the crystals of the desired metal oxide grew from the nucleus (core) on the metal coordination polymer.

### IR spectrums of metal coordination polymer and polymers after nucleations of CoO, NiO, MnO

The IR spectrums of the metal coordination polymer and the polymers after nucleations were measured (FIG. 10). FIG. 10 is a graph substituting for a drawing, which illustrates the IR spectrums of the metal coordination polymer and the polymers after nucleations. Since the absorption peak derived from the carbonyl group observed at 1694 cm⁻¹ in the IR spectrum of the metal coordination polymer was shifted on the higher wave number side in the IR spectrums of the polymers after the nucleations, and a new absorption peak was observed near 1550 cm⁻¹, it was confirmed that the carboxy group of the metal coordination polymer was coordinated to the metal oxides (CoO, MnO, NiO).

### Consideration

The examples relate to the separation method of the metal that includes a step of using the metal coordination polymer where the metal oxide is coordinated and generating the metal oxide using a metal sulfate as a raw material.

Conventionally, a method of separating metals using a reducing agent has been known. The metals that were able to be separated using this method were only those that had a high standard reduction potential, (+0.8 V to +1.5 V) and were easily reduced. That is, the metals suitable for recovery by the conventional methods were about 10 metals of platinum group elements, copper, silver, gold, and mercury.

On the other hand, the method indicated by the examples separates the metal as a metal oxide via a metal sulfate of the metal to be separated. In this method, any metal that can form the sulfate and the oxide can be separated and recovered.

In the examples, the polymer was used as the carrier of the metal oxide. It is believed that this polymer had a number average molecular weight (Mₙ) of from 1,500 to 1,000,000 from its physical property.

### INDUSTRIAL APPLICABILITY

This invention can separate the separation target metal, and thus can be utilized in the recycling industry and the metalworking industry.

## Claims

1. A method for separating a separation target metal using a metal ligand having an oxide of the separation target metal as a core, the method comprising
a step of dispersing the metal ligand in a solution containing the separation target metal and separating the separation target metal in the solution as the oxide of the separation target metal.

2. The method according to claim 1, wherein
the metal ligand is a metal ligand that has the oxide of the separation target metal as a core and has a coordinatable group containing any one or more of an oxygen atom, a nitrogen atom, a sulfur atom, and a phosphorus atom.

3. The method according to claim 2, further comprising
a step of obtaining the metal ligand using a ligand having the coordinatable group and a metal salt of the separation target metal.

4. The method according to claim 1, wherein
the metal ligand is a metal coordination polymer having the oxide of the separation target metal as a core and a carboxy group as a coordination group.

5. The method according to claim 4, further comprising
a step of obtaining the metal coordination polymer using a ligand polymer having the carboxy group and a sulfate of the separation target metal.

6. The method according to claim 5, wherein
the ligand polymer having the carboxy group is a copolymer of (1) an optionally substituted divinylbenzene and (2) acrylic acid or methacrylic acid and has a number average molecular weight from 1,500 to 1,000,000, both inclusive.

7. The method according to claim 3 or 6, wherein
the separation target metal includes any one, two, or more of cobalt, nickel, and manganese.

8. A metal coordination polymer comprising:
a metal oxide; and
a ligand polymer that carries the metal oxide, wherein
the metal oxide is an oxide of any one, two, or more of cobalt, nickel, and manganese, and
the ligand polymer is a copolymer of (1) an optionally substituted divinylbenzene and (2) acrylic acid or methacrylic acid.
